# EUROPÄISCHE PATENTANMELDUNG

(11) **EP 4 684 978 A1**
(43) Veröffentlichungstag der Anmeldung: **28.01.2026**
(21) Anmeldenummer: 25184926.1
(22) Anmeldetag: 24.06.2025
(51) Int. Cl.: B60C 1/00, C08L 7/00, C08L 9/00

(54) **FAHRZEUGREIFEN UND SEITENWAND FÜR FAHRZEUGREIFEN**

(30) Priorität: 24.07.2024 DE 102024206947
(71) Anmelder: Continental Reifen Deutschland GmbH, 30175 Hannover (DE)
(72) Erfinder: Kleffmann, Jens, 30175 Hannover (DE); Jeromin, Dieter, 30175 Hannover (DE)
(74) Vertreter: Continental Corporation

(57) **Zusammenfassung**

Die Erfindung betrifft einen Fahrzeugreifen, der wenigstens in einer Seitenwand (4) ein Vulkanisat enthält, welches durch Schwefelvulkanisation einer Kautschukmischung erhalten ist, die wenigstens folgende Bestandteile enthält:
a) mindestens 55 phr zumindest eines Butadien-Kautschuks,
b) 20 bis 50 phr zumindest eines Rußes als Füllstoff, wobei der Ruß bevorzugt eine geringe mittlere BET-Oberfläche von maximal 25 bis 45 m2/g aufweist.

## Beschreibung

Die Erfindung betrifft einen Fahrzeugreifen, insbesondere einen Nutzfahrzeugreifen. Ferner betrifft die Erfindung die Seitenwand eines Nutzfahrzeugreifens und die Verwendung der schwefelvernetzbaren Kautschukmischung für die Seitenwand eines Nutzfahrzeugreifens.

Die Kautschukzusammensetzung der Seitenwand des Fahrzeugreifens beeinflusst die Eigenschaften eines Fahrzeugreifens. Daher werden an diese Kautschukmischungen für Fahrzeugreifen und insbesondere für die Seitenwand von Fahrzeugreifen sehr hohe Anforderungen gestellt, insbesondere hinsichtlich Reifenrollwiderstand. Zusätzlich zum Reifenrollwiderstand ist auch das Abriebsverhalten der Seitenwandmischung von Bedeutung.

Der Rollwiderstand (im Englischen kurz auch RR für "rolling resistance") von Reifen wird häufig durch Trommeltests gemessen. Rollwiderstands-Trommeltestmessungen sind in der Regel die Grundlage für gesetzliche Rollwiderstands-Zertifizierungen, für die Vergabe von Rollwiderstands-Labels oder für die Überprüfung von Rollwiderstands-Grenzwertanforderungen. Diese Rollwiderstands-Trommeltestmessungen basieren in der Regel auf Tests nach ISO 28580. In der ISO 28580 ist die Ziel-Umgebungstemperatur für den Rollwiderstands Test 25 °C, wobei zusätzlich eine lineare Rollwiderstands-Korrekturformel für Testtemperaturen zwischen 20 °C und 30 °C angegeben ist.

Speziell für Lkw- und/oder Busreifen ist zum Einfluss von niedrigen oder sehr niedrigen Umgebungstemperaturen (z. B. unter 0 °C) auf den Reifen-Rollwiderstand bisher wenig veröffentlicht. Die verfügbare Korrekturformel für die Auswirkung der Umgebungstemperatur auf den Rollwiderstand gilt nur für einen Temperaturbereich von 20 °C bis 30 °C. Diese Korrekturformel berücksichtigt weiterhin keine individuellen Reifenmerkmale und -technologien, wie z.B. die verwendeten Kautschukmischungen, die Reifenkonstruktion, die Reifenkontur etc., sie basiert nur auf dem gemessenen Rollwiderstandswert mit festen Eingangswerten und unterscheidet nur zwischen "PKW-Reifen", "kleineren LKW- und Busreifen" und "größeren LKW- und Busreifen".

Der vorliegenden Erfindung lag nun die Aufgabe zugrunde, eine Kautschukmischung für eine Seitenwand und eine entsprechende Seitenwand bereitzustellen, der im Vergleich zum Stand der Technik eine Verbesserung im Eigenschaftsprofil insbesondere in Bezug auf das Rollwiderstandsverhalten bei niedrigen Umgebungstemperaturen unter Standardraumtemperatur und die Temperatursensitivität des Rollwiderstandsverhaltens aufweist.

Überraschenderweise wird mit der erfindungsgemäßen Kautschukmischung, dem erfindungsgemäßen Vulkanisat, der erfindungsgemäßen Seitenwand und dem erfindungsgemäßen Fahrzeugreifen eine besonders hohe Verbesserung des Rollwiderstandsverhalten insbesondere bei niedrigen Umgebungstemperaturen erzielt.

Von der Erfindung sind sämtliche vorteilhafte Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung oder von Elementen des Reifens, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung umfasst ist.

Bei Angaben von Größenbereichen oder Werteintervallen im vorliegenden Text sind die angegebenen Grenzwerte immer jeweils im angegebenen Bereich bzw. Intervall inbegriffen.

Im Folgenden werden die Bestandteile der erfindungsgemäßen Kautschukmischung und die Eigenschaften der daraus hergestellten Seitenwand näher beschrieben.

Sämtliche Angaben zu den Bestandteilen der erfindungsgemäßen Kautschukmischung jeglicher Abstufung bei der Bevorzugung dieser Merkmale gelten entsprechend ebenfalls für das erfindungsgemäße Vulkanisat, die erfindungsgemäße Seitenwand eines Reifens, den erfindungsgemäßen (Nutz-)Fahrzeugreifen sowie erfindungsgemäße Verwendungen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht Mw gemäß GPC von größer als 20000 g/mol. Die angegebenen Wertebereiche sind immer einschließlich der Grenzwerte.

Erfindungsgemäß enthält die Kautschukmischung wenigstens einen Dienkautschuk, der ein Butadien-Kautschuk (Synonyme: BR, BR-Kautschuk, Polybutadien) ist.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Anteil an BR in der Kautschukmischung beträgt erfindungsgemäß mindestens 55 phr und maximal 100 phr. In letzterem Fall besteht der Kautschukanteil der Kautschukmischung definitionsgemäß aus BR.

Bevorzugt beträgt der Anteil an BR in der Kautschukmischung mindestens 60 phr, bevorzugter mindestens 65 phr, bevorzugter mindestens 70 phr.

Erfindungsgemäß kann die Kautschukmischung weiterhin wenigstens einen oder mehrere Dienkautschuke aus der Gruppe bestehend aus natürlichem Polyisopren (NR) und synthetischem Polyisopren (IR) sowie Styrol-Butadien-Kautschuk (SBR) mit einem Anteil von maximal 45 phr, bevorzugter maximal 40 phr, bevorzugter maximal 35 phr, bevorzugter maximal 30 phr enthalten.

Der Dienkautschuk Styrol-Butadien-Kautschuk (SBR) kann insbesondere ein lösungspolymerisierter Styrol-Butadien-Kautschuk (SSBR) oder ein emulsionspolymerisierter Styrol-Butadien-Kautschuk (ESBR) sein. Der Anteil an SBR in der Kautschukmischung ist bevorzugt nicht höher als der gesamte Anteil an Polyisopren, also NR und IR.

Weitere mögliche Dienkautschuke, die in der erfindungsgemäßen Mischung in kleineren Mengen enthalten sein können, sind Butadien-Isopren-Kautschuk, Styrol-Isopren-Kautschuk, Halobutyl-Kautschuk, Polynorbornen, Isopren-Isobutylen-Copolymer, Ethylen-Propylen-Dien-Kautschuk, Nitril-Kautschuk, Chloropren-Kautschuk, AcrylatKautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Dabei finden die dem Fachmann für diese Kautschuke bekannten Weichmacher, Vulkanisationssysteme und Zuschlagstoffe bevorzugte Anwendung.

Mit den erfindungsgemäßen Anteilen an BR und NR bzw. IR oder SBR wird die der Erfindung zugrunde liegende Aufgabe besonders gut gelöst und eine aus der Kautschukmischung hergestellte Seitenwand weist insbesondere bei niedrigen Temperaturen ein gutes Rollwiderstandsverhalten auf.

Bevorzugt addieren sich die Anteile an NR, IR, SBR und BR annähernd zu 100 phr oder genau zu 100 phr, bevorzugter 100,00 phr. Bevorzugter addieren sich die Anteile an NR, IR und BR annähernd zu 100 phr oder genau zu 100 phr, bevorzugter 100,00 phr.

Die Summe aller enthaltenen Kautschuke ergibt definitionsgemäß immer 100 phr.

Der in der vorliegenden Kautschukmischung verwendete BR-Kautschuk kann mittels metallorganischer Katalysatoren polymerisiert sein, z. B. mit Neodym-, Kobalt-, Titan-, Nickel-, Lithium-, Natrium- oder anderen Katalysatoren oder Ziegler-Natta-Katalysatoren.

Es kann sich um BR-Kautschuk mit hohem cis-Anteil (high-cis) oder niedrigem cis-Anteil (low-cis) oder mit hohem oder niedrigem trans-Anteil (high-trans/low-trans) handeln. Dieser cis- oder trans- Anteil wird üblicherweise durch den Hersteller des BR-Kautschukes angegeben und kann z.B. mit Kernspinresonanzspektroskopie ermittelt werden.

Der in der erfindungsgemäßen Kautschukmischung enthaltene Butadien-Kautschuk (Polybutadiene, BR) ist besonders bevorzugt vom low-cis-Typ. Unter den sogenannten high-cis- und low-cis-Typen werden Polybutadiene mit einem cis-Anteil größer oder gleich 90 Gew.-% (Gewichts-%, high-cis-Typ) bzw. Polybutadiene mit einem cis-Anteil kleiner als 90 Gew.-% (low-cis-Typ) verstanden. Bevorzugt weist der verwendete BR-Kautschuk einen cis-Anteil zwischen 35 % und 45 % (jeweils inklusive) auf.

Die eingesetzten Polybutadiene können bevorzugt mit Modifizierungen und Funktionalisierungen endgruppenmodifiziert und/oder entlang der Polymerketten funktionalisiert sein. Die Polybutadiene können einfach oder beliebig mehrfach modifiziert sein. Es kann sich dabei um Funktionalisierungen handeln, die bevorzugt mit Ruß, insbesondere Carbon Black (Industrieruß), und/oder auch mit Silica interagieren können. Bei der Modifizierung oder Funktionalisierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Der in der vorliegenden Kautschukmischung verwendete BR-Kautschuk kann auch anderweitig, zum Beispiel für die Anbindung von Kieselsäure funktionalisiert sein. Die Begriffe "Kieselsäure" und "Silica" werden im Rahmen der vorliegenden Erfindung synonym verwendet.

Bevorzugt sind die Kettenenden des in der vorliegenden Kautschukmischung verwendeten BR-Kautschuks funktionalisiert. Der funktionalisierte BR-Kautschuk kann mehrere Funktionalisierungen enthalten.

Die Glasübergangstemperatur (Tg) des BR liegt bevorzugt bei -85 °C oder darunter, bevorzugter zwischen -90 °C und - 100 °C (jeweils inbegriffen), noch bevorzugter bei oder unter -95 °C.

Die Bestimmung der Glasübergangstemperatur (Tg) des BR-Kautschuks erfolgt anhand von Dynamischer Differenz-Kalorimetrie (engl. Dynamic Scanning Calorimetry, DSC gemäß DIN 53765: 1994-03 bzw. ISO 11357-2:1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120°C mit 10°C/min).

Der in der vorliegenden Kautschukmischung verwendete BR-Kautschuk weist bevorzugt eine molare Masse Mw zwischen 100.000 und 600.000 g/mol auf.

Es können auch mehrere der vorgenannten BR-Kautschuke gemischt sein.

Der verwendete BR kann auf Rohöl basieren. Der verwendete BR kann bevorzugt auch teilweise oder vollständig auf recycelten, erneuerbaren und/oder biobasierten Rohstoffen basieren. Dieser BR aus nachwachsenden Rohstoffen kann z.B. auf Basis von Holz, Rüben, Kartoffeln (Schalen), Früchten (Haut) oder Nebenprodukten der Biodiesel Produktion, wie z.B. Glycerin, gewonnen werden.

Alle verwendeten Kautschukmaterialien können auf recycelten, erneuerbaren und/oder biobasierten Rohstoffen oder auch auf Recyclingmaterial basieren, z.B. auf Recyclinggummi, insbesondere auf recyceltem Naturkautschuk oder IR/BR-Recyclinggummi.

Die Kautschukmischung kann als weiteren Bestandteil bis zu 10 phr, bevorzugt bis zu 5 phr, besonders bevorzugt bis zu 3 phr mindestens einer Kieselsäure als Füllstoff aufweisen. Es kann auch keine Kieselsäure enthalten sein.

Als Füllstoffe kommen erfindungsgemäß Ruße zum Einsatz mit einem Anteil von 20 phr bis 50 phr, bevorzugt 30 bis 45 phr, bevorzugter 35 bis 40 phr.

Die erfindungsgemäßen Ruße weisen bevorzugt eine geringe mittlere Stickstoff-Oberfläche (BET-Oberfläche) gemäß DIN ISO 9277 von 25 bis 45 m2/g (Quadratmeter pro Gramm), bevorzugt von 28 bis 38 m2/g auf (Grenzwerte immer jeweils inklusive).

Mit der Kombination aus dem erfindungsgemäßen hohen Anteil an BR mit einer niedrigen Glasübergangstemperatur und dem erfindungsgemäßen hohen Anteil des Füllstoffes Ruß mit einer niedrigen spezifischen Oberfläche werden besonders gute Rollwiderstandeigenschaften des Vulkanisats erzielt.

Der verwendete Füllstoff (z. B. Ruß oder auch Kieselsäure und andere Füllstoffe) kann teilweise oder vollständig aus recyceltem, erneuerbarem und/oder biobasiertem Material bestehen, z. B. aus wiedergewonnenem oder recyceltem Füllstoff oder aus Füllstoff auf der Basis von aus nachhaltigen oder nachwachsenden Rohstoffen, z. B. Kieselsäure auf der Basis von Reishülsen oder Ruß auf der Grundlage von Pflanzenöl, wie z.B. Palmöl, Rapsöl usw. Beim Ruß handelt es sich bevorzugt um Recycling-Ruß. Zum Beispiel kann es sich um ein Ruß-Material handeln, welches durch Pyrolyse von Altreifen bzw. Altgummi generiert wurde.

Zu den weiteren optionalen nicht verstärkenden Füllstoffen zählen im Rahmen der vorliegenden Erfindung z.B. Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
1) Alterungsschutzmittel und Ozonschutzwachse wie
   z. B. Diamine, wie N-Phenyl-N'-(1 ,3-dimethylbutyl)-p-phenylendiamin (6PPD), N,N'-Diphenyl-p-phenylendiamin (DPPD), N,N'-Ditolyl-p-phenylendiamin (DTPD), N-(1 ,4-dimethylpentyl)-N'-phenyl-p-phenylendiamin (7PPD), N-Isopropyl-N'-phenyl-p-phenylendiamin (IPPD),
   und/oder Dihydrochinoline, wie 2,2,4-Trimethyl-1 ,2-dihydrochinolin (TMQ),
   und/oder substituierte Bisphenole, wie 2,2'-Methylenbis(4-methyl-6-tert-butylphenol) (BPH),
   und/oder substituierte Phenole, wie Butylhydroxytoluol (BHT),
2) Aktivatoren, wie z. B. Zinkoxid und Fettsäuren (z. B. Stearinsäure) und/oder sonstige Aktivatoren, wie Zinkkomplexe wie z.B. Zinkethylhexanoat,
3) weitere Aktivatoren und/oder Agenzien für die Anbindung von Füllstoffen, insbesondere Ruß oder Kieselsäure, wie beispielsweise S-(3-Aminopropyl)-Thioschwefelsäure und/oder deren Metallsalze (Anbindung an Ruß).
4) Kohlenwasserstoffharze, wie insbesondere Phenolharze, insbesondere als Klebharze,
5) Mastikationshilfsmittel, wie z. B. 2,2'-Dibenzamidodiphenyldisulfid (DBD) und
6) Prozesshilfsmittel, wie insbesondere Fettsäureester und Metallseifen, wie z.B. Zinkseifen und/oder Calciumseifen I) Weichmacher, wie insbesondere wie aromatische, naphthenische oder paraffinische Mineralölweichmacher, wie z.B. MES (Mild Extraction Solvate) oder RAE (Residual Aromatic Extract) oder TDAE (Treated Distillate Aromatic Extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt.

Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenischen Ölen.

Der Mengenanteil der Gesamtmenge an weiteren Zusatzstoffen beträgt bevorzugt 3 bis 100 phr, besonders bevorzugt 3 bis 50 phr, bevorzugter 5 bis 80 phr, bevorzugter 5 bis 50 phr, bevorzugter 5 bis 20 phr, besonders bevorzugt 5 bis 15 phr.

Die erfindungsgemäße Kautschukmischung wird bevorzugt vulkanisiert verwendet, insbesondere in Seitenwänden von Fahrzeugreifen.

Die Begriffe "vulkanisiert" und "vernetzt" werden im Rahmen der vorliegenden Erfindung synonym verwendet.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern. Bevorzugt ist die Verwendung wenigstens eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS), N-tert-Butyl-2-benzothiazolsulfenimid (TBSI), und/oder wenigstens eines Guanidin-Beschleunigers, wie Diphenylguanidin (DPG).

Insbesondere können auch zwei oder mehrere Beschleuniger eingesetzt werden.

Als schwefelspendende Substanz können dabei alle dem Fachmann bekannten schwefelspendenden Substanzen verwendet werden.

Ferner kann in der Kautschukmischung eines oder mehrere Reversionsschutzmittel, wie beispielsweise 1 ,6-Bis(N,N-dibenzylthiocarbamoyldithio)hexan, Hexamethylen-1 ,6-bis(thiosulfat) Dinatriumsalz-Dihydrat, und/oder Tetrabenzylthiuramdisulfid (TBzTD), eingesetzt werden.

Außerdem können in der Kautschukmischung Vulkanisationsverzögerer vorhanden sein.

Die Herstellung der Kautschukmischung erfolgt ansonsten nach dem in der Kautschukindustrie üblichen Verfahren, bei dem zunächst in einer oder mehreren Mischstufen eine Grundmischung mit allen Bestandteilen außer dem Vulkanisationssystem (z. B. Schwefel und vulkanisationsbeeinflussende Substanzen) hergestellt wird. Durch Zugabe des Vulkanisationssystems in den Mischstufen, bevorzugt in der letzten Mischstufe, wird die Fertigmischung erzeugt.

Die Fertigmischung wird z.B. durch einen Extrusionsvorgang oder Kalandrieren weiterverarbeitet und in die entsprechende Form gebracht. Die erfindungsgemäße Kautschukmischung ist besonders für die Verwendung in den Seitenwänden von Fahrzeugreifen, insbesondere Fahrzeugluftreifen geeignet.

Zur Verwendung als Seitenwand wird die Mischung als Fertigmischung vor der Vulkanisation in die entsprechende Form der Seitenwand des Reifens gebracht und bei der Herstellung des Fahrzeugreifenrohlings wie bekannt aufgebracht und vulkanisiert.

Gegenstand der vorliegenden Erfindung ist wie eingangs bereits ausgeführt insbesondere ein Fahrzeugreifen und eine Seitenwand in dem Fahrzeugreifen, der bzw. die wenigstens ein Vulkanisat aus der vulkanisierten erfindungsgemäßen Kautschukmischung aufweist.

Weiterhin umfasst die vorliegende Erfindung auch Seitenwandmischungen und daraus hergestellte Seitenwandkomponenten für warmrunderneuerte Reifen, die Kautschukmischungen der beschriebenen Rezeptur umfassen.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden. Bevorzugt ist der Einsatz für Nutzfahrzeugreifen wie Lkw- oder Bus-Reifen.

Optional können die Fahrzeugreifen im Rahmen der vorliegenden Erfindung zwei bis sechs Gürtellagen aufweisen, mit Winkeln für einzelne Gürtellagen von 0° bis 90°, einschließlich paralleler (0°) und kreuzender (90°) Gürtellagen. Die Gürtellagen können z.B. Stahlcord-Verstärkungen oder andere, nicht stählerne Cordverstärkungen, z.B. Aramid, Glasfaser, Kohlefaser, synthetische Fasern oder Kord aufweisen.

Bevorzugt weisen die Fahrzeugreifen ein Laufstreifenprofil mit einem Rillenvolumen zwischen 5 % und 15 % auf (siehe auch Definition gemäß EP 2 292 448 B1 unten). Reifen, bei denen das Rillenvolumen zwischen 5% und 15% (jeweils inklusive) beträgt, weisen üblicherweise eine profilbezogene Rollwiderstandsoptimierung auf.

Mögliche Laufstreifenprofile können z.B. Rippenprofile, Rillenprofile, Lamellenprofile oder Blockprofile umfassen. Rillen- oder Lamellengeometrien können in Seiten- (90°) oder Umfangsrichtung (0°) oder mit konstanter oder wechselnder Richtung zwischen 0° und 90° gegenüber der Umfangsrichtung ausgeprägt sein. Die Richtungen, Geometrien oder Breiten der Lamellen können sich entlang des Laufstreifens ändern. Die Profile können beispielsweise bis zu 10 umlaufende Rillen über die gesamte Laufstreifenbreite aufweisen. Die Profile können beispielsweise bis zu 600 Querrillen oder Lamellen mit pro Umfangsrippe aufweisen.

Möglich sind z.B. auch seitliche oder umlaufende Rillen oder Lamellen mit rechteckigen Rillen oder Rillen mit einer radial zunehmenden oder abnehmenden Breite. Möglich sind z.B. weiterhin konstante Breiten der Rillen vom Rillenboden bis zur Lauffläche oder wechselnde Breiten der Rillen von unten nach oben.

Die Erfindung soll nun anhand von Vergleichs- und Ausführungsbeispielen näher erläutert werden.

Die erfindungsgemäßen Beispiele sind mit E1 bis E6 und das Vergleichsbeispiel mit V1 gekennzeichnet.

E1 bis E6 unterscheiden sich in den Anteilen an BR bzw. NR und der BET-Oberfläche des als Füllstoffs verwendeten Rußes.

Verwendete Substanzen:
NR: Fachüblicher geeigneter Naturkautschuk.
BR: funktionalisierter Low-cis-BR, Glasübergangstemperatur Tg = -95 °C.
Ruß:
   - N 339 mit BET-Oberfläche gemäß DIN ISO 9277 von 93 m²/g,
   - N 660 mit BET-Oberfläche gemäß DIN ISO 9277 von 35 m²/g.
   - N 772 mit BET-Oberfläche gemäß DIN ISO 9277 von 30 m²/g.
      1) Sonstige Zusatzstoffe, nämlich Zinkoxid, Stearinsäure, Alterungsschutzmittel, Ozonschutzwachs.
      2) Weichmacher-Öl
      3) CBS und Vulkanisierungschemikalien (Vulkachemikalien).

Die Massenanteile in phr sind in Tabelle 1 angegeben.

**Tabelle 1:**

| **Bestandteile** | **Einheit** | **V1** | **E1** | **E2** | **E3** | **E4** | **E5** | **E6** |
|---|---|---|---|---|---|---|---|---|
| NR | phr | 50 | 30 | 0 | 50 | 30 | 50 | 30 |
| BR | phr | 50 | 70 | 100 | 50 | 70 | 50 | 70 |
| Ruß N339 | phr | 37 | 37 | 37 | 0 | 0 | 0 | 0 |
| Ruß N660 | phr | 0 | 0 | 0 | 37 | 37 | 0 | 0 |
| Ruß N 772 | phr | 0 | 0 | 0 | 0 | 0 | 37 | 37 |
| Weichmacheröl | phr | 1,5 | 1,5 | 1,5 | 1,5 | 1,5 | 1,5 | 1,5 |
| Alterungsschutzmittel | phr | 7,7 | 7,7 | 7,7 | 7,7 | 7,7 | 7,7 | 7,7 |
| Vulkachemikalien | phr | 7 | 7 | 7 | 7 | 7 | 7 | 7 |

Die Mischungsherstellung erfolgte nach dem in der Kautschukindustrie üblichen Verfahren in drei Stufen.

Aus sämtlichen Mischungen wurden Prüfkörper durch Vulkanisation nach t95 bis t100 (gemessen am Moving Die Rheometer gemäß ASTM D 5289-12/ ISO 6502) unter Druck bei 150 °C hergestellt und mit diesen Prüfkörpern für die Kautschukindustrie typische Materialeigenschaften mit den im Folgenden angegebenen Testverfahren ermittelt.
- Shore A Härte bei Raumtemperatur (RT) und bei 70 °C gemäß ISO 868,
- Rückprall bei Raumtemperatur (RT) und bei 70 °C gemäß ISO 4662
- Spannungswert bei 300% Dehnung (= Modul 300) bei RT, Zugfestigkeit sowie Bruchdehnung bei Raumtemperatur (RT), gemäß DIN 53 504.
- DIN Abrieb: DIN Test gemäß DIN 53516.

**Tabelle 2:**

| **Messung** | **Einheit** | **V1** | **E1** | **E2** | **E3** | **E4** | **E5** | **E6** |
|---|---|---|---|---|---|---|---|---|
| Härte RT | Shore A | 52 | 52 | 55 | 49 | 49 | 49 | 51 |
| Härte 70°C | Shore A | 48 | 49 | 52 | 46 | 47 | 45 | 48 |
| Rückprall RT | % | 57 | 59 | 63 | 63 | 63 | 66 | 69 |
| Rückprall 70°C | % | 61 | 61 | 60 | 66 | 63 | 68 | 70 |
| Modul 300 RT | MPa | 4,9 | 4 | 4 | 4 | 3 | 3,8 | 3,6 |
| Zugfestigkeit RT | MPa | 17 | 13 | 10 | 13 | 9 | 14,5 | 11,6 |
| Bruchdehnung RT | % | 640 | 578 | 548 | 636 | 615 | 675 | 603 |
| DIN Abrieb | mm³ | 47 | 20 | 17 | 82 | 58 | 82 | 69 |

Der DIN Abrieb, also das Abriebvolumen der Seitenwandmischung ist ein Indikator bzgl. des Abriebverhaltens von der Seitenwand eines Reifens. Ein niedrigerer Wert für den DIN Abrieb bedeutet ein verbessertes Abriebsverhalten der Seitenwandmischung.

Der Rückprall, auch als Rückprallelastizität bezeichnet, ist ein Indikator bzgl. des Rollwiderstandsverhaltens der Seitenwandmischung. Eine hohe Rückprallelastizität bedeutet einen niedrigen, also guten, Rollwiderstand hinsichtlich der eingesetzten Seitenwandmischung.

Wie in Tabelle 2 erkennbar führt eine Erhöhung des BR-Anteils von 50 auf 70 phr (Vergleich V1 gegenüber E1; Vergleich E3 gegenüber E4; Vergleich E5 gegenüber E6) zu keiner deutlichen Erhöhung der Rückprallwerte bei 70 °C. Bzgl. des Rückpralls bei RT ist währenddessen als Trend eine leichte Erhöhung der Werte zu erkennen. Das Abriebsverhalten wird durch eine Erhöhung des BR-Anteils verbessert.

Eine Reduzierung der Ruß-BET-Oberfläche von ca. 92 m2/g auf ca. 35 m2/g und auf ca. 30 m2/g (Vergleich V1 gegenüber E3 und gegenüber E5 und Vergleich E1 gegenüber E4 und gegenüber E6) führt zu einer signifikanten Verbesserung (Erhöhung) von Rückprall bei RT und Rückprall bei 70°C, also zu einem verbesserten Rollwiderstandsverhalten des Reifens. Weiterhin ist Tabelle 2 zu entnehmen, dass der DIN Abrieb erhöht wird.

Das im DIN Test ermittelte Abriebvolumen für die Seitenwandmischung ist ein Indikator für das Abriebsverhalten der Reifenseitenwand. Ein niedriges Abriebvolumen aus dem DIN Test ermöglicht den Einsatz der Reifenseitenwandmischung in einem sehr breiten Einsatzfeld der Reifen, also auch für Reifen mit häufigem Bordsteinkantenkontakt, wie es zum Beispiel bei Stadtbusreifen der Fall ist.

Bei einem Einsatzfeld von Reifen mit wenig Bordsteinkantenkontakt, wie es zum Beispiel im Langstreckeneinsatz, auch als Long Haul Einsatz oder Motorway Einsatz bezeichnet, der Fall ist, müssen die Seitenwandmischungen der Reifen nicht zwingend so sehr für niedrigen DIN Abrieb, also ein geringes Abriebvolumenoptimiert sein.

Testsimulationen wurden für Reifen mit den Mischungen gemäß V1 und E1 bis E4 als Seitenwand durchgeführt, um das Rollwiderstandsverhalten und dessen Veränderung bei verschiedenen Temperaturen zu vergleichen. Simulationsergebnisse sind in Tabelle 4 dargestellt.

Der in diesen Simulationen betrachtete Reifen weist die folgenden Eigenschaften auf: Der Testreifen ist ein 315/70 R 22,5"-Antriebsachsreifen, optimiert für den Long Haul-Einsatz, mit Fokus auf eine Optimierung des Rollwiderstandsverhaltens: Der Reifen weist ein rillenarmes Profil mit Lamellen (13,3% Rillenvolumen, vgl. z.B. Definition des Rillenvolumens in der EP 2 292 448 B1) und eine geringe Profiltiefe (im Beispiel 13,2 mm) auf.

Wie in der EP 2 292 448 B1 beschrieben, weisen Laufstreifen von Fahrzeugluftreifen für Nutzfahrzeuge Umfangsrillen auf, welche den Laufstreifen in Umfangsrippen gliedern, wobei eine parallel zur Laufstreifenperipherie im Laufstreifen verlaufende Einhüllende, die die tiefste Umfangsrille von radial innen berührt, gemeinsam mit der Laufstreifenperipherie und schulterseitigen Flankenabschnitten ein Laufstreifen-Bruttovolumen definiert und sämtliche Rillen im Laufstreifen das Rillenvolumen definieren.

Zu beachten ist im realen Einsatz von Reifen allgemein, dass die realen Umgebungstemperaturen erheblich von der Zieltemperatur der Prüfung des Rollwiderstandsverhaltens im sogenannten Trommeltest gemäß ISO 28580 von 25 °C abweichen können.

Signifikante Unterschiede bei den Umgebungstemperaturen haben erhebliche Auswirkungen auf das Rollwiderstandsverhalten des Reifens. In der Regel führt eine niedrigere Umgebungstemperatur zu einem höheren, also schlechteren, Rollwiderstand im Vergleich zu dem Rollwiderstand, der unter den ISO-Testbedingungen gemessen wird. Andererseits führt eine höhere Umgebungstemperatur in der Regel im Vergleich zum ISO-Test zu einem niedrigeren, also besseren Rollwiderstand im Vergleich zu dem Rollwiderstand, der unter den ISO-Testbedingungen gemessen wird.

Der Rollwiderstand des Reifens wirkt sich direkt auf die reifenbezogene Energieaufnahme bzw. den Energieverbrauch aus, der somit bei niedrigeren Temperaturen steigt. Dies wirkt sich z. B. auch auf den Kraftstoffverbrauch von Fahrzeugen mit Verbrennungsmotor oder auf den Stromverbrauch von batteriebetriebenen Elektrofahrzeugen aus.

Bei batteriebetriebenen Fahrzeugen wirkt sich der Anstieg des reifenbedingten Energieverbrauchs bei niedrigen Umgebungstemperaturen, also Betriebstemperaturen, somit auch negativ auf die maximale Reichweite bei einer bestimmten, z. B. maximalen, Batterieladung aus, verglichen mit der maximalen Reichweite bei höheren Umgebungstemperaturen.

Die ISO 28580 sieht zwar eine Extrapolations-Funktion für Umgebungstemperaturen zwischen 20 °C und 30 °C vor. Für sehr niedrige Umgebungstemperaturen unter 20 °C, insbesondere unter 0 °C, kann diese Funktion jedoch nicht verwendet werden.

Da Rollwiderstands-Ergebnisse für niedrige Umgebungstemperaturen (unter 20 °C, insbesondere unter 0 °C) insbesondere für Nutzfahrzeugreifen, wie Lkw-/ Bus-Reifen nicht bekannt bzw. nicht veröffentlicht sind, ist eine quantifizierte Korrelation des Reifen-Rollwiderstands bei niedrigen Umgebungstemperaturen nicht verfügbar.

Aus diesem Grund sind auch keine Optimierungsmöglichkeiten bekannt, die die Sensitivität des Reifen-Rollwiderstands gegenüber niedrigen Umgebungstemperaturen verringert. Daher sind folgerichtig auch keine Maßnahmen bekannt, die den Anstieg des Energieverbrauchs der Reifen bei niedrigen Umgebungstemperaturen (unter 20°C, insbesondere unter 0°C) im Vergleich zu höheren Umgebungstemperaturen (20°C bis 30°C) reduzieren. Dies bedeutet z.B. für batteriebetriebene Elektrofahrzeuge, dass keine reifenbezogenen Optimierungsmaßnahmen bekannt sind, die die Differenz der maximalen Reichweite bei gegebener Batterieladung (z.B. maximal) bei niedrigen Umgebungstemperaturen gegenüber der maximalen Reichweite bei gegebener Batterieladung (z.B. maximal) bei höheren Umgebungstemperaturen verringern.

Um die Änderung des Rollwiderstandverhaltens bei niedrigen Temperaturen zu quantifizieren, wurde im Rahmen der vorliegenden Erfindung daher in zwei Schritten eine Simulationsmethodik entwickelt.

Im ersten Schritt wurde der Reifen-Rollwiderstand im Trommeltest bei verschiedenen Umgebungstemperaturen gemessen. Abgesehen von den Umgebungstemperaturen waren die Testbedingungen wie bei dem Test gemäß ISO 28580. Insbesondere auch die Aufwärmzeit bei den Trommeltests entsprach der ISO-Norm.

Der zweite Schritt war eine Simulation des Reifen-Rollwiderstands unter Verwendung derselben Parameter wie in den Trommeltests.

Zur Validierung der Simulationsmethodik wurden drei nachfolgend beschriebene verschiedene Reifenvarianten in den Trommeltests bei unterschiedlichen Temperaturen getestet und dieselben Tests durch Simulationen nachgestellt. Die Ergebnisse für den Rollwiderstand in den Tests und in den Simulationen sind in Tabelle 3 dargestellt.

### Reifenvariante 1:

Ein Antriebsachsreifen mit den Abmessungen 315/70 R 22,5", der für den Einsatz im Fernverkehr (,Long Haul') optimiert ist, wobei der Schwerpunkt auf der Optimierung des Rollwiderstands liegt: Der Reifen hat ein geringes Rillenvolumen mit Lamellen (13,3 % Rillenvolumen, Bestimmung des Rillenvolumens gemäß EP 2 292 448) sowie eine geringe Profiltiefe (13,2 mm). Die Laufflächen und Karkassen des Reifens umfassen vulkanisierte Kautschukmischungen, die für niedrige Rollwiderstände unter ISO-Trommeltestbedingungen optimiert sind. Auch die Reifenkontur ist bezüglich des Rollwiderstandes optimiert. Die Reifenvariante 1 wurde auch den in Bezug auf die vorliegende Erfindung vorgenommenen Simulationen zu Grunde gelegt.

### Reifenvariante 2:

Ein Antriebsachsreifen mit den Abmessungen 315/70 R 22,5", der für den regionalen Einsatz optimiert ist, wobei der Schwerpunkt auf der Optimierung der Laufleistung und der Traktionseigenschaften des Reifens liegt: Der Reifen hat ein hohes Rillenprofil mit blockigen Elementen (16,2 % Rillenvolumen, Bestimmung des Rillenvolumens gemäß EP 2 292 448) sowie eine hohe Profiltiefe (18,7 mm). Die Laufflächen des Reifens umfassen vulkanisierte Kautschukmischungen, die für eine hohe Laufleistung und eine hohe Traktion optimiert sind, Die Karkassen des Reifens umfassen vulkanisierte Kautschukmischungen, die bezüglich einer beständig hohen Laufleistung optimiert sind.

Reifenvariante 3: Im Wesentlichen gleicher Reifen wie in Reifenvariante 2, jedoch mit einer auf 4 mm heruntergeschliffenen Profiltiefe. Das Schleifen erfolgt mit hohem Aufwand, um eine sehr glatte Reifenoberfläche zu erzielen, die der Oberflächenqualität eines Reifens am Ende seiner Lebensdauer nahekommt.

Mit den beschriebenen drei Reifenvarianten ist eine große Bandbreite von Reifenauslegungsgrenzen abgedeckt:
- hohe Bandbreite der Reifen-Rollwiderstände,
- hohe Bandbreite der Profiltiefen,
- Profiltiefen von Neureifen und weitestgehend abgefahrenen Reifen
- hohe Bandbreite der Laufflächenmerkmale.

Der Rollwiderstand der drei beschrieben Reifenvarianten wurden jeweils bei den folgenden drei verschiedenen Umgebungstemperaturen getestet und simuliert:
+25 °C (Referenztemperatur nach ISO 28580),
+9 °C (Temperatur nahe der jährlichen Durchschnittstemperatur für mitteleuropäische Länder),
-10°C

Die Simulationen des Rollwiderstandes im zweiten Schritt wurden für genau dieselben Reifenvarianten und für die Temperaturen, die bei den Reifentests verwendet wurden, durchgeführt:
Die Simulationen des Rollwiderstandes wurde mit einem eigens entwickelten und optimierten Rollwiderstands-Simulationsprogramm durchgeführt.

Für die Rollwiderstands-Simulation wurden die gleichen Randbedingungen wie bei der Reifenprüfung verwendet (z.B. hinsichtlich Trommeldurchmesser, Geschwindigkeit, Luftdruck, Reifenlast, Felgengröße).

Tabelle 3 gibt die Rollwiderstandsergebnisse der zuvor beschriebenen Trommeltests und Simulationen in % in Bezug auf den Referenzwert bei 25 °C (100 %) an.

**Tabelle 3:**

| | **25°C** | **9°C** | | **-10°C** | |
|---|---|---|---|---|---|
| | ref (%) | test (% vs 25°C) | simulation (% vs 25°C) | test (% vs 25°C) | simulation (% vs 25°C) |
| **Reifenvariante 1** | 100 | 115 | 115 | 135 | 135 |
| **Reifenvariante 2** | 100 | 110 | 110 | 130 | 130 |
| **Reifenvariante 3** | 100 | 115 | 115 | 135 | 140 |

Aus Tabelle 3 ist ersichtlich, dass sich die Simulationsergebnisse und die Testergebnisse sehr ähnlich verhalten.

Ebenso ist aus Tabelle 3 ersichtlich, dass sich der Rollwiderstand für alle getesteten Reifentypen mit Abnahme der Temperatur deutlich erhöht.

Im Folgenden wurden Simulationen für Reifen mit den Mischungen gemäß V1 und E1 bis E6 als Seitenwandmischung, die ansonsten den Reifen der oben beschriebenen Reifenvariante 1 entsprechen, durchgeführt, um das Rollwiderstandsverhalten und dessen Veränderung bei verschiedenen Temperaturen zu vergleichen.

Die Simulationsergebnisse für den Rollwiderstand bei Raumtemperatur (RT = 25 °C) werden in Tabelle 4 als Absolutwerte in der Einheit kg/t angegeben. Weiterhin wird die Veränderung des Rollwiderstandes bei -10 °C im Vergleich zum Rollwiderstand bei 25 °C angegeben.

Daneben wird auch die Rollwiderstandssensitivität, also die Veränderung des Rollwiderstandes bei -10 °C gegenüber dem Rollwiderstand bei 25 °C Raumtemperatur in % angegeben.

Für diese Simulationen ist die Reifenvariante 1 aus Tabelle 3 verwendet worden.

**Tabelle 4:**

| **Messung** | **Einheit** | **V1** | **E1** | **E2** | **E3** | **E4** | **E5** | **E6** |
|---|---|---|---|---|---|---|---|---|
| Rollwiderstand bei 25 °C | kg/t | 4,36 | 4,36 | 4,37 | 4,22 | 4,23 | 4,22 | 4,22 |
| Rollwiderstand bei - 10 °C | kg/t | 5,85 | 5,80 | 5,78 | 5,66 | 5,67 | 5,64 | 5,64 |
| Rollwiderstandssensitivität (-10 °C vs. 25 °C) | % | 134,2 | 133,0 | 132,3 | 134,1 | 134,0 | 133,6 | 133,6 |
| Rollwiderstandsvorteil gegenüber Referenz bei 25°C | kg/t | Referenz | 0,00 | -0,01 | 0,14 | 0,13 | 0,14 | 0,14 |
| Rollwiderstandsvorteil gegenüber Referenz bei -10°C | kg/t | Referenz | 0,05 | 0,07 | 0,19 | 0,18 | 0,21 | 0,21 |

Tabelle 4 zeigt, dass es insbesondere für die Varianten E3 bis E6 deutliche Vorteile im Rollwiderstand bei 25 °C Umgebungstemperatur und bei -10 °C Umgebungstemperatur gegenüber der Referenz V1 gibt.

In Tabelle 5 wird der Rollwiderstandsvorteil gegenüber den Rezeptänderungen der Seitenwandmischung aufgezeigt. In Tabelle 5 sind für die Referenz V1 und die Varianten E1 bis E6 die relevanten Unterschiede bezüglich dem Anteil von Butadien in phr und den Ruß-BET-Oberflächen dargestellt (Spalte 1 und 2). Zusätzlich ist der simulierte Rollwiderstandsvorteil (RR) gegenüber der V1 Referenz für 25 °C Umgebungstemperatur und -10° C Umgebungstemperatur gezeigt.

**Tabelle 5:**

| | 1 | 2 | 3 | 4 |
|---|---|---|---|---|
| | BR (phr) | BET Oberfläche vom Ruß (m2/g) | RR Vorteil bei 25°C gegenüber der Referenz | RR Vorteil bei -10°C gegenüber der Referenz |
| V1 (Referenz) | 50 | 93 | 0 (Referenz) | 0 (Referenz) |
| E1 | 70 | 93 | 0 | 0,05 |
| E2 | 100 | 93 | -0,01 | 0,07 |
| E3 | 50 | 35 | 0,14 | 0,19 |
| E4 | 70 | 35 | 0,13 | 0,18 |
| E5 | 50 | 30 | 0,14 | 0,21 |
| E6 | 70 | 30 | 0,14 | 0,21 |

Tabelle 5 verdeutlicht, dass die Veränderung des BR-Anteils in der Seitenwandmischung einen geringen Effekt auf Rollwiderstandsverbesserungen hat (Vergleich V1 gegenüber E1 und E2; Vergleich E3 gegenüber E4; Vergleich E5 gegenüber E6). Der Einsatz eines Rußes mit reduzierter BET-Oberfläche hat einen deutlichen Effekt auf Rollwiderstandsverbesserungen für die Umgebungstemperatur 25°C. (Vergleich V1 gegenüber E3 und E5; Vergleich E1 gegenüber E4 und E6). Überraschenderweise ist der Effekt der Oberfläche des Rußes auf Rollwiderstandsverbesserungen für die Umgebungstemperatur von -10 °C besonders hoch (Vergleich V1 gegenüber E3 und E5; Vergleich E1 gegenüber E4 und E6).

Erfindungsgemäße Reifen mit Seitenwänden, die das erfindungsgemäße Vulkanisat enthalten bzw. daraus gebildet sind, weisen überraschenderweise ein deutlich verbessertes Rollwiderstandsverhalten auf.

Die Temperatursensitivität des Rollwiderstandsverhaltens ist also vorteilhafterweise reduziert. Damit werden die Eigenschaften des Reifens bzw. der Seitenwände des Reifens durch die erfindungsgemäße Kautschukmischung verbessert.

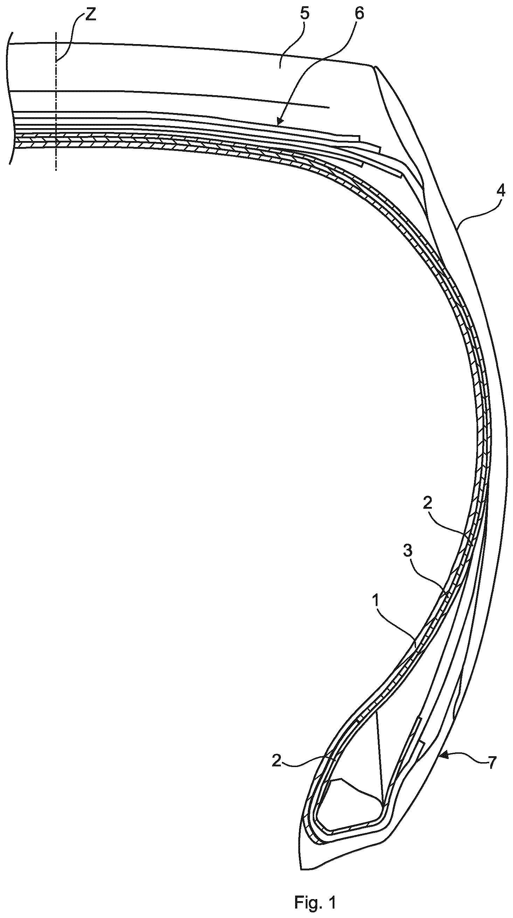

Figur 1 zeigt einen beispielhaften Reifen im Querschnitt (nur die Hälfte rechts des Reifenzenits Z ist vollständig dargestellt, der Reifen ist spiegelsymmetrisch bzgl. Z aufgebaut).

In Fig. 1 sind von den üblichen Bauteilen eines Nutzfahrzeugreifens in Radialbauart in einer Reihenfolge vom Reifeninneren zum Reifenäußeren insbesondere eine luftdichte Innenschicht 1, eine mit Festigkeitsträgern verstärkte Radialkarkasse 2, eine Squeegee-Abstandslage 3 zwischen der luftdichten Innenschicht 1 und der Radialkarkasse 2 sowie die erfindungsgemäße Seitenwand 4, die die erfindungsgemäße Seitenwand-Kautschukmischung enthält, dargestellt.

Weiterhin ist ein Laufstreifen 5 und radial innerhalb des Laufstreifens 5 ein Gürtelverband 6 mit Gürtellagendargestellt.

Die Seitenwand 4 reicht seitlich am Reifen vom Laufstreifen 5 bis zu einem Wulstbereich 7 des Reifens.

Der Laufstreifen 5 kann in radialer Richtung z.B. zweischichtig aufgebaut sein und sich aus einer Laufstreifencap mit Umfangsrillen und Rippen, die die Profilierung bilden, und einer radial innerhalb der Laufstreifencap verlaufenden Laufstreifenbase zusammensetzen.

### Bezugszeichenliste

- 1: Innenschicht
- 2: Radialkarkasse
- 3: Squeegee-Abstandslage
- 4: Seitenwand
- 5: Laufstreifen
- 6: Gürtelverband
- 7: Wulstbereich
- Z: Reifenzenit

## Patentansprüche

1. Fahrzeugreifen, der wenigstens in einer Seitenwand (4) ein Vulkanisat enthält, welches durch Schwefelvulkanisation einer Kautschukmischung erhalten ist, die wenigstens folgende Bestandteile enthält:
a) mindestens 55 phr, bevorzugter mindestens 60 phr, bevorzugter mindestens 65 phr, besonders bevorzugt mindestens 70 phr zumindest eines Butadien-Kautschuks,
b) 20 bis 50 phr, bevorzugt 30 bis 45 phr, besonders bevorzugt 35 bis 40 phr zumindest eines Rußes als Füllstoff, wobei der Ruß bevorzugt eine geringe mittlere BET-Oberfläche gemäß DIN ISO 9277 von 25 bis 45 m2/g, bevorzugt von 28 bis 38 m2/g aufweist.

2. Fahrzeugreifen gemäß Anspruch 1, wobei der Butadien-Kautschuk in der Kautschukmischung eine Glasübergangstemperatur von gleich oder unter - 85 °C, bevorzugter von gleich oder unter -90 °C, noch bevorzugter gleich oder unter -95°C aufweist.

3. Fahrzeugreifen gemäß Anspruch 1 oder 2, wobei der Butadien-Kautschuk eine Funktionalisierung der Polymerkette für Ruß und/oder Silica, besonders bevorzugt für Ruß aufweist.

4. Fahrzeugreifen gemäß Anspruch 3, wobei die Funktionalisierung am Ende der Polymerkette oder an anderen Positionen der Polymerkette vorliegt, wobei es sich bei der Funktionalisierung um eine solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handelt.

5. Fahrzeugreifen gemäß Anspruch 1 bis 4 mit folgendem weiteren Bestandteil in der Kautschukmischung:
c) maximal 45 phr, bevorzugter maximal 40 phr, bevorzugter maximal 35 phr, besonders bevorzugt maximal 30 phr mindestens eines weiteren Polymers ausgewählt aus einem oder mehreren von Polyisopren, bevorzugt natürlichem Polyisopren, und Styrol-Butadien-Kautschuk.

6. Fahrzeugreifen gemäß Anspruch 5, wobei die Kautschukmischung keine weiteren Kautschuk-Polymere enthält.

7. Fahrzeugreifen gemäß einem der Ansprüche 1 bis 5 mit folgendem weiteren Bestandteil in der Kautschukmischung:
d) Kieselsäure als Füllstoff mit einem Anteil von maximal 10 phr, bevorzugt maximal 5 phr, bevorzugt maximal 3 phr.

8. Fahrzeugreifen gemäß einem der Ansprüche 1 bis 7, wobei die verwendeten Rohstoffe in der Kautschukmischung teilweise oder vollständig auf recycelten, erneuerbaren und/oder biobasierten Rohstoffen basieren, wobei bevorzugt alle verwendeten Kautschukmaterialien in der Kautschukmischung auf recycelten, erneuerbaren und/oder biobasierten Rohstoffen basieren, insbesondere auf recyceltem BR-Recyclinggummi und/oder Naturkautschuk und/oder auf IR-Recylinggummi.

9. Fahrzeugreifen gemäß einem der Ansprüche 1 bis 8, wobei der verwendete Butadien-Kautschuk in der Kautschukmischung teilweise oder vollständig auf recycelten, erneuerbaren und/oder biobasierten Rohstoffen basiert, bevorzugt auf Basis von einem oder mehreren von Holz, Rüben, Kartoffeln, Früchten oder Nebenprodukten der Biodiesel Produktion wie Glycerin.

10. Fahrzeugreifen gemäß einem der Ansprüche 1 bis 9, wobei der oder die verwendeten Füllstoffe in der Kautschukmischung teilweise oder vollständig aus recyceltem und/oder erneuerbarem und/oder biobasiertem Material bestehen, wobei insbesondere Ruße aus Recycling-Ruß und/oder Kieselsäure auf der Basis von Reishülsen verwendet werden.

11. Fahrzeugreifen gemäß einem der Ansprüche 1 bis 10, wobei die Kautschukmischung Öle, z.B. Weichmacheröle, enthält, wobei es sich bei den verwendeten Ölen zumindest teilweise um Rapsöl handelt.

12. Fahrzeugreifen nach einem der Ansprüche 1 bis 11, bei dem es sich um einen Neureifen oder um einen warmrunderneuerten Reifen handelt, der ein Luftreifen oder ein Vollgummireifen ist.

13. Fahrzeugreifen nach einem der Ansprüche 1 bis 12, wobei der in der vorliegenden Kautschukmischung verwendete Butadien-Kautschuk für die Anbindung von Rußen funktionalisiert ist und einen cis Anteil von 35 bis 45 % und eine Glasübergangstemperatur von -90 °C bis -100 °C aufweist.

14. Fahrzeugreifen nach einem der Ansprüche 1 bis 13, wobei der Fahrzeugreifen ein Laufstreifenprofil mit einem Rillenvolumen zwischen 5 % und 15 % aufweist.

15. Fahrzeugreifen nach einem der Ansprüche 1 bis 14, der ein Nutzfahrzeugreifen ist.
